(19) Europäisches Patentamt
European Patent Office
Office européen des brevets

(11) EP 3 808 755 A1

(12) EUROPEAN PATENT APPLICATION

(43) Date of publication:
**21.04.2021 Bulletin 2021/16**

(51) Int Cl.:
***C07G 1/00*** *(2011.01)* ***C08H 7/00*** *(2011.01)*

(21) Application number: **19202957.7**

(22) Date of filing: **14.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ecole Polytechnique Federale De Lausanne (EPFL) EPFL-TTO
1015 Lausanne (CH)**

(72) Inventors:
- **Luterbacher, Jeremy
1022 Chavannes pres Renens (CH)**
- **Dick, Graham
Vancouver, BC,
V6T 1G3 (CA)**
- **Bertella, Stefania
1023 Crissier (CH)**

(74) Representative: **Schaad, Balass, Menzl & Partner AG
Dufourstrasse 101
Postfach
8034 Zürich (CH)**

# (54) PRODUCTION OF FRAGMENTS OF LIGNIN WITH FUNCTIONAL GROUPS

(57) The present invention relates to a method for producing fragments of lignin with functional groups.

EP 3 808 755 A1

## Description

The present invention relates to a method for producing fragments of lignin with functional groups.

## Background of the Invention

Lignin is reported to be the second most abundant natural polymer on earth after cellulose, accounting for 15-30 wt.% of lignocellulosic biomass and about 30% of the organic carbon present in the biosphere. Unlike cellulose and hemicellulose, the two other major constituents of lignocellulosic biomass, lignin is not a polysaccharide, a polymer of sugars. Rather, lignin is a complex polymer of several different aromatic subunits. This structure imparts lignin with an energy density that is 30% greater than cellulosic polymers and makes it one of the few natural sources of aromatic molecules. Because of these properties, lignin monomers are increasingly recognized as essential precursors for the production of renewable aromatic chemicals and drop-in fuels.

WO 2017/178513 addresses the lack of practical high-yielding lignin depolymerization methods that can be integrated with the processes for upgrading the polysaccharide fractions of the parent biomass. In particular, said document describes a process comprising the step of heating a lignocellulose-containing composition under acidic conditions with *inter alia* an aldehyde such as formaldehyde, separating the resulting fragments of lignin from the obtained mixture, and converting said fragments into monomers via a reduction.

In addition, the Luterbacher group reported a strategy to address the condensation of the benzylic alcohol of the lignin structure with adjacent aromatic lignin subunits during the lignin extraction procedure, thereby allowing for the fractionation of the lignocellulose biomass into its three constituent biopolymers (Luterbacher et al. "Formaldehyde Stabilization Facilitates Lignin Monomer Production during Biomass Depolymerisation", Science 80, 2016, 354 (6310), pages 329-333). The aldehydes stabilize the lignin through the formation of an acetal with the free diol of the lignin side-chain, preventing the benzylic alcohol from eliminating as water and forming a benzylic cation or alkene.

An unexpected consequence of using formaldehyde to form an acetal during the extraction of lignin is that it also hydroxymethylates the electron-rich aryl species of the lignin. This fundamentally changes the structure of lignin and doubles the number of monomers that can be expected upon hydrogenolysis.

Furthermore, in the above-mentioned processes significant amounts of undesirable by-products were reported to occur, reducing the efficiency and yield of the process.

Apart from the indicated reduction with hydrogen for the production of monomers, the fragments of lignin obtained by said process are unlikely to be used in further chemical reactions. Thus, these fragments of lignin are mostly just depolymerized to obtain the corresponding monomers, wherein other possible applications of these valuable compounds are prevented.

Therefore, there is a need of a method for the production of fragments of lignin that are easily accessible and can be subjected to further simple chemical transformation to interconvert the available functionality, change the solubility, or install specific structural motifs. As for all lignins of the prior art, such transformations were infeasible or impossible.

Hence, it was an object of the present invention to overcome the drawbacks of the above-mentioned processes.

In particular, it was an object of the present invention to provide a method for the production of fragments of lignin which, according to the desired use/application, already have active chemical (functional) groups or wherein said active chemical (functional) groups can be further derivatized for the desired purpose.

Further, a method providing a high yield of fragments of lignin should be provided, wherein harsh reaction conditions can be avoided and which is compatible with common biorefinery processes. Additionally, the formation of undesired by-products should be reduced or even completely eliminated.

According to the present invention, the above objectives are achieved by the specific method as described herein for the production of fragments of lignin.

## Summary

The present invention has unexpectedly solved the above objectives by the provision of a new method for producing fragments of lignin. In particular, a method including the addition of a specific aldehyde was provided that unexpectedly leads to a lignin compound with a functional group and to the reduction of undesired by-products such that these compounds can be obtained in high yields.

Thus, the subject of the present invention is a method for producing monomers from lignin via depolymerization comprising the steps of

a) providing a lignocellulose-containing composition;

b) heating the composition of step a) under acidic conditions together with an aldehyde according to Formula 1,

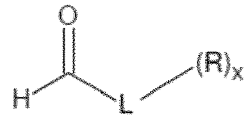

Formula 1

wherein L is absent or a linking group, and wherein R is a functional group, x is 1 to 5;

c) separating fragments of lignin having one or more functional group(s) from the mixture of step b); and
d) optionally further reacting one or more functional group(s) of the product of step c) to give the fragments of lignin having one or more functional group(s) R'.

A further subject of the invention is fragments of lignin having one or more functional groups R or R' obtainable by the method according to the invention.
Another aspect of the invention is a composition containing the above fragments of lignin, wherein these fragments are preferably represented by one or more of Formulae 2 to 4

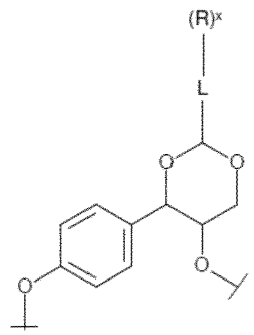

Formula 2,

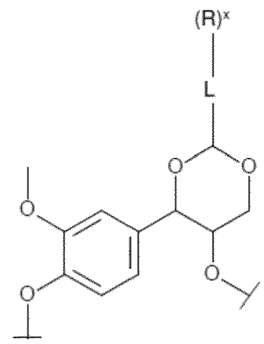

Formula 3, and/or

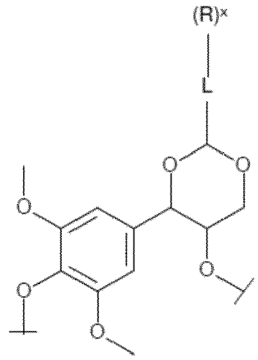

Formula 4.

Finally, a further subject of the invention is the use of fragments of lignin according to the invention or the composition according to the invention for the production of resins, adhesives, polymers, carbon fibres, concrete additives, thermal insulation, electrical insulation, paints, surfactants, photoresist, photographic film, antimicrobial films, anti-fungal films, anti-corrosion coatings, waterproofing materials, lubricants, UV-absorbing additive for polymers, activated carbons, pigments, dyes, anti-corrosion additives, fire-retardants, catalysts, battery anodes, battery cathodes, ionomers, ion-exchange resins, ion-exchange membranes, super-absorbent polymers, gas permeable membranes, UV-absorbing creams (sunblock or sunscreen), drug delivery substrates, fragrance delivery substrates, flavour delivery substrates, food additives (antioxidant), food supplements (antioxidant), cosmetic additives, fuel for concrete kilns, fuel for electricity generation, fuel for steel mills, explosives, solid rocket fuel, gunpowder, smokeless powder, fireworks, ablative armour, reactive armour, pesticide, fungicide, antifungal, antiviral, tanning creams, and/or antibiotic.

**Detailed Description of the Invention**

Step a) of the method according to the present invention is the provision of a lignocellulose-containing composition.
Lignocellulose (biomass) is considered to be one of the most abundantly available renewable raw materials on earth. Lignocellulosic biomass can be classified into virgin biomass, waste biomass and energy crops. Virgin lignocellulosic biomass includes all naturally occurring terrestrial plants, such as trees, bushes and grass. Waste lignocellulosic biomass is produced as a low value by-product of various industrial sectors, such as agricultural (corn stover, sugarcane bagasse, straw, etc.) and forestry (saw mill and paper mill discards).
Lignocellulose comprises hemicellulose, cellulose and lignin. Hemicellulose and cellulose can both be regarded as carbohydrate polymers. The carbohydrate polymers contain five and six carbon sugar monomers and are bound to lignin.
Lignin can be regarded as an aromatic polymer.

Said aromatic polymer contains phenol-propane subunits such as *p*-hydroxyphenyl, guaiacyl, and syringyl subunits.

Xylan is a polysaccharide which belongs to the hemicelluloses, wherein the main monomer unit of xylan is D-xylose. Cellulose can be regarded as a polysaccharide, wherein the main monomer unit is D-glucose which is bonded via β-1-4 linkages.

In a preferred embodiment of the present invention the lignocellulose-containing composition is lignocellulosic biomass, preferably virgin lignocellulosic biomass, e.g. wood or grasses. The lignocellulosic biomass is preferably derived from trees, such as birch, beech, poplar, cedars, Douglas firs, cypresses, firs, junipers, kauri, larches, pines, hemlocks, redwoods, spruces, and yews. Most preferred is debarked hardwood or softwood, such as birch and/or beech (hardwoods) or pine and/or spruce (softwoods) as lignocellulose-containing composition.

In an alternative preferred embodiment of the present invention the lignocellulose-containing composition is derived from energy crops. Energy crops are crops with high yields of lignocellulosic biomass. In addition, energy crops are fast growing such that the lignocellulosic biomass is readily available within a short period of time, for example after a couple of months. Examples of energy crops include giant reed, big bluestem, Chinese tallow, camelina, duckweed, purging nut, millettia pinnata, switchgrass, and elephant grass.

It is preferred that the lignocellulose-containing composition is solid at a temperature of 23°C. In a preferred embodiment the lignocellulose-containing composition is air dried at a temperature below 100 °C, preferably below 65°C. For example, the lignocellulose-containing composition is air dried at ambient temperature for storage to remove excessive water. The air-dried lignocellulose-containing composition preferably comprises less than 50 wt.%, more preferably less than 30 wt.%, in particular 0 to 20 wt.% of water.

Further, the lignocellulose-containing composition preferably has a lignin content of 1 wt.% to 50 wt.%, more preferably of 10 wt.% to 40 wt.%, even more preferably 13 wt.% to 35 wt.%, in particular 15 wt.% to 30 wt.% based on the total weight of the lignocellulose-containing composition, wherein lignin is determined as Klason lignin.

For the determination of Klason lignin, the Klason lignin test is applied. In this test wood particles (0.25-0.50 g) were loaded into 50 mL beakers with the addition of 7.5 mL of a 72 wt.% $H_2SO_4$ solution. The mixture was left at room temperature for 2 h and stirred with a glass rod every 10 minutes. Afterwards the slurry was transferred into a round-bottom flask and 290 mL of water were added to reach a $H_2SO_4$ concentration of 3 wt.%. The glass bottle was sealed with a screw cap and sterilized at 120 °C for 1 h in an autoclave. The resultant solution was filtered, and the precipitate was washed with water and dried at 105°C and weighed to determine Klason lignin.

The content of Klason lignin can be determined by the following equation:

$$\text{Content of Klason lignin } [\%] = \frac{KL \times 100}{LCC},$$

wherein

KL is Klason lignin [g]
LCC is lignocellulose-containing composition [g]

Further, step a) preferably includes the provision of the lignocellulose-containing composition in form of particles, such as chips, flakes, pellets, beads, splints, granules, shivers, dust and fragments. For example, trees can be cut and sawn to obtain these particles.

In a preferred embodiment, step a) involves suspending the lignocellulose-containing composition in an organic solvent.

An organic solvent can be considered as a carbon-based compound which is preferably in a liquid state at 23°C. An organic solvent can comprise one single organic solvent or a mixture of organic solvents.

It is further preferred that the organic solvent has a boiling point of 60°C to 250°C, preferably at 1013 mbar. Further, the boiling point is not related to a single temperature but can also refer to a temperature interval, for example when a mixture of organic solvents is used. The boiling point preferably is determined according to Pharm. Eur. 6.0, Chapter 2.2.12.

In a preferred embodiment the organic solvent has a water solubility at 25°C of more than 50 wt.%, preferably more than 70 wt.%, in particular more than 90 wt.%. The upper limit of the water solubility can be 90 wt.% or preferably 100 wt.%. The water solubility can be determined via visual inspection, i.e. the portion of organic solvent to water is determined until precipitation or until a suspension or a phase separation between water and organic solvent appears.

In a preferred embodiment of the invention the second solvent has a log$K_{ow}$ value of -3.0 to 0.8, preferably of -2.5 to 0.7, more preferably of -1.8 to 0.6, in particular of -1.2 to 0.5.

The $K_{ow}$ value (also known as P-value) is a distribution coefficient (partition coefficient) indicating the ratio of concentrations of a compound in the two phases of an octanol/water (hydrophobic/hydrophilic) mixture. The $K_{ow}$ value is determined according to the following formula

$$K_{ow} = P = \frac{c_o^{S_i}}{c_w^{S_i}},$$

wherein

$c_o^{S_i}$ is the concentration of the species i of a chemical compound in the octanol phase and

$c_w^{S_i}$ is the concentration of the species i of a chemical compound in the water phase.

The $K_{ow}$ value (P-value) is generally used in form of the decade logarithm as $\log K_{ow}$ (logP).

$$\log K_{ow} = \log P = \log \frac{c_o^{S_i}}{c_w^{S_i}}$$

Examples of organic solvent are alcohols with 1 to 6 carbon atoms, such as methanol, ethanol, propanol, isopropanol, butanol, and polyethylene glycol; ethers, such as dimethyl ether, diethyl ether, and methyl-tert-butyl ether; cyclic ethers, such as tetrahydrofuran, 2-methyltetrahydrofuran, 3-methyltetrahydrofuran, and dioxane; nitriles, such as acetonitrile; carboxylic acids, such as formic acid, lactic acid, pyruvic acid, propionic acid, and acetic acid; carboxamides, such as dimethylformamide and dimethylacetamide; lactones, such as γ-valerolactone; lactams, such as N-methyl-2-pyrrolidone; sulfoxides, such as dimethyl sulfoxide; and sulfones, such as sulfolane.

Preferred are aprotic solvents with the above-mentioned $\log K_{ow}$ value of -3.0 to 0.8, preferably of -2.5 to 0.7, more preferably of -1.8 to 0.6, in particular of -1.2 to 0.5. Examples are ethers, such as dimethyl ether, diethyl ether, and methyl-tert-butyl ether; cyclic ethers, such as tetrahydrofuran, 2-methyltetrahydrofuran, 3-methyltetrahydrofuran, and dioxane; nitriles, such as acetonitrile; carboxamides, such as dimethylformamide and dimethylacetamide; lactones, such as γ-valerolactone; lactams, such as N-methyl-2-pyrrolidone; sulfoxides, such as dimethyl sulfoxide; and sulfones, such as sulfolane. Especially preferred are ethers and cyclic ethers, in particular cyclic ethers such as dioxane, 3-methyltetrahydrofuran, 2-methyltetrahydrofuran, and tetrahydrofuran, especially dioxane (1,4-dioxane).

In a preferred embodiment the organic solvent can comprise water. It is preferred that the organic solvent comprises less than 50 volume percent of water, preferably less than 30 volume percent of water, in particular 0 to 10 volume percent of water.

In a preferred embodiment step a) involves suspending the lignocellulose-containing suspension in an aprotic organic solvent with the above-mentioned $\log K_{ow}$ value of -3.0 to 0.8, wherein the aprotic organic solvent comprises less than 50 volume percent of water, preferably less than 30 volume percent of water, in particular 0 to 10 volume percent of water.

It is preferred that the suspension can contain 2 to 15 ml, preferably 3 to 10 ml, in particular 4 to 6 ml of organic solvent per one gram of the lignocellulose-containing composition.

Step b) of the method according to the present invention includes heating the composition of step a) under acidic conditions together with an aldehyde according to Formula 1

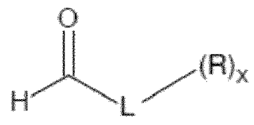

Formula 1

wherein L is absent or a linking group, and
wherein R is a functional group, and x is an integer from 1 to 5.

Heating the composition from step a) is regarded as applying heat to the composition provided in step a) to raise the temperature of the composition provided in step a) from the starting temperature to a higher end temperature. In a preferred embodiment of the invention the composition of step a) is provided at a temperature of 15°C to 25°C, which is considered to be the starting temperature. In a preferred embodiment in step b) a temperature which is considered to be the end temperature of 35 to 140°C, preferably of 40 to 130°C, in particular of 50 to 120 °C can be applied. It is particularly preferred that a temperature of 60 to 100 °C, especially of about 85 °C is applied.

In a preferred embodiment step b) can be carried out for 0.1 to 72 hours, preferably between 0.5 and 12 hours, more preferably between 0.75 and 10 hours, even more preferably between 1 and 8 hours, in particular between 1.5 and 5.5 hours.

In a preferred embodiment in step b) a temperature of 50 to 120°C is applied for 0.1 to 72 hours.

Further, in step b) the reaction mixture can preferably be subjected to a mechanical movement, such as stirring.

To achieve the acidic conditions one or more acidic compounds are added to the composition of step a). An acidic compound can be regarded as a chemical compound if, when added into water, it lowers the pH value to less than 7. Examples of acidic compounds are organic carboxylic acids, such as acetic acid, and mineral acids, wherein the mineral acids are preferred. Mineral acids are regarded as acids which do not contain a carbon atom. Examples of mineral acids are hydrochloric acid, hydrobromic acid, hydroiodic acid, sulfuric acid, phosphoric acid, boric acid and silicic acid. Preferred are hydrochloric acid, sulfuric acid and phosphoric acid, more preferred are hydrochloric acid and sulfuric acid, in particular hydrochloric acid.

In a preferred embodiment 0.5 to 20 mmol, preferably 1 to 9 mmol, in particular 1.5 to 3 mmol of the

acidic compound per gram of the lignocellulose-containing composition can be used to achieve the acidic conditions.

Further, in step b) an aldehyde according to Formula 1 is heated together with the lignocellulose-containing composition under the acidic conditions, preferably at a temperature of 60°C to 100°.

The aldehyde according to Formula 1 is an organic compound represented by the following chemical structure

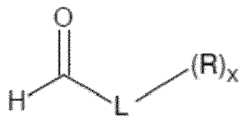

Formula 1

wherein L is absent or a linking group, and
wherein R is a functional group, and x is an integer from 1 to 5.

The left part of the above compound according to Formula 1 is an aldehyde group, characterized by a carbon atom bonded to a hydrogen and to an oxygen via a double bond.

A functional group can be regarded as a characteristic group of one or more atoms in a compound, which contributes to the properties and the reaction behaviour of said compound. Functional groups can be categorized by means of the above-mentioned one or more atoms of the characteristic group.

The functional group R or, in case that there is more than one functional group R, each functional group can be independently selected.

In a preferred embodiment each R is a functional group selected independently from alkene, alkyne, aldehyde, carboxylic acids, carboxylic ester, carboxylic amide, amino acids, ketene, ketone, diazoketone, imine, oxime, amine, acetal, ketal, hemi-acetal, hemi-ketal, fulminate, cyanate, isocyanate, isothiocyanate, nitrile, ether, thioether, hydroxyl, thiol, nitro, fluoride, chloride, bromide, iodide, azide, triflate, boronic acid, boronic acid ester, borate, borate salt, borane, silane, silyl ether, siloxane, silanol, sulfonamide, sulfonic acid, sulfonate, sulfoxide, sulfone, dithiane, phosphate, phosphate ester, phosphonate, phosphonic acid, phosphonate ester, phosphonium salt, phosphine, phosphite, phosphite ester, and phosphite salt, or a heterocycle selected from aziridine, 2*H*-azirine, oxirane, thiirane, azetidine, 2,3-dihydroazete, azete, 1,3-diazetidine, oxetane, 2 *H*-oxete, thietane, 2*H*-thiete, azetidin-2-one, pyrrolidine,3-pyrroline, 2-pyrroline, 2*H*-pyrrole, 1*H*-pyrrole, pyrazolidine, imidazolidine, 2-pyrazoline, 2-imidazoline, pyrazole, imidazole, 1,2,4-triazole, 1,2,3-triazole, tetrazole, tetrahydrofuran, furan, 1,3-diozolane, tetrahydrothiophene, thiophene, oxazole, isoxazole, isothiazole, thiazole, 1,2-oxathiolane, 1,3-oxathiolane, 1,2,5-oxadiazole, 1,2,3-oxadiazole, 1,3,4-thiadiazole, 1,2,5-thiadiazole, sulfolane, 2,4-thiazolidinedione, succinimide, 2-oxazolidone, hydantoin, piperidine, pyridine, piperazine, pyridazine, pyrimidine, pyrazine, 1,2,4-triazine, 1,3,5-triazine, tetrahydropyran, 2*H*-pyran, 4*H*-pyran, pyrylium, 1,4-dioxane, 1,4-dioxine, thiane, 2*H*-thiopyran, 4*H*-thiopyran, 1,3-dithiane, 1,4-dithiane, 1,3,5-trithiane, morpholine, 2*H*-1,2-oxazine, 4*H*-1,2-oxazine, 6*H*-1,2-oxazine, 2H-1,3-oxazine, 4*H*-1,3-oxazine, 6*H*-1,3-oxazine, 4*H*-1,4-oxazine, 2*H*-1,4-oxazine, thiomorpholine, 4*H*-1,4-thiazine, 2*H*-1,2-thiazine, 6*H*-1,2-thiazine, 2*H*-1,4-thiazine, cytosine, thymine, uracil, thiomorpholine dioxide, hexahydro-1*H*-pyrrolizine, 1,4,5,6-tetrahydrocyclopental[b]pyrrole, 1,3a,4,6a-tetrahydropyrrolo[3,2-b]pyrrole, 1,4-dihydropyrrolo[3,2-b]pyrrole, 1,6-dihydropyrrolo[2,3-b]pyrrole, 6*H*-furo[2,3-b]pyrrole, 4*H*-furo[3,2-b]pyrrole, 4*H*-thieno[3,2-b]pyrrole, 6*H*-thieno[2,3-b]pyrrole, 2,3-dihydro-1*H*-indene, indene, indoline, 3*H*-indole, 1*H*-indole, 2*H*-isoindole, indolizine, 1*H*-indazole, benzimidazole, 4-azaindole, 5-azaindole, 6-azaindole, 7-azaindole, 7-azaindazole, pyrazolo[1,5-a]pyrimidine, purine, benzofuran, isobenzofuran, benzo[c]thiophene, benzo[b]thiophene, 1,2-benzisoxazole, 2,1-benzisoxazole, 1,2-benzisothiazole, 2,1-benzisothiazole, benzoxazole, benzthiazole, benzo[c][1,2,5]thiadiazole, 1,2-benzisothiazole-3(2*H*)-one, adenine, guanine, decahydroisoquinoline, decahydroquinoline, tetrahydroquinoline, 1,2-hydroquinoline, 1,2-dihydroisoquinoline, quinoline, isoquinoline, 4*H*-quinolizine, quinoxaline, phthalazine, quinazoline, cinnoline, 1,8-naphthyridine, pyrido[3,2-*d*]pyrimidine, pyrido[4,3-*d*]pyrimidine pyrido[3,4-d]pyrazine, pyrido[2,3-b]pyrazine, pteridine, 2*H*-chromene, 1*H*-isochromene, 3*H*-isochromene, 2*H*-chromen-2-one, 2*H*-benzo[*e*][1,2]oxazine, 2H-benzo[e][1,3]oxazine, 2*H*-benzo[b][1,4]oxazine, quinoline-2(1*H*)-one, isoquinolin-1(2*H*)-one, isoquinolin-1(2*H*)-one, fluorene, carbazole, dibenzofuran, acridine, phenazine, phenoxazine, phenothiazine, phenoxathiine, quinuclidine, 1-azaadamantane, 2-azaadamantane, 2,3-dihydroazepine, 2,5-dihydroazepine, 4,5-dihydroazepine, azepine, 2*H*-azepine, 3*H*-azepine, 4*H*-azepine, 1,2-diazepine, 1,3-diazepine, 1,4-diazepine, oxepane, thiepine, 1,4-thiazepine, azocane, azocine, thiocane, azonane and azecine.

In a more preferred embodiment each R is a functional group selected independently from alkene, alkyne, aldehyde, carboxylic acids, carboxylic ester, carboxylic amide, amino acids, ketone, diazoketone, imine, oxime, amine, acetal, ketal, hemi-acetal, hemi-ketal, nitrile, ether, thioether, hydroxyl, thiol, nitro, fluoride, chloride, bromide, iodide, azide, triflate, boronic acid, boronic acid ester, borate, borate salt, borane, silane, silyl ether, siloxane, silanol, sulfonamide, sulfonic acid, sulfonate, sulfoxide, sulfone, dithiane, phosphate, phosphate ester, phosphonate, phosphonic acid, phosphonate ester, phosphonium salt, phosphine, more preferably each R is a functional group independently from alkene, alkyne, aldehyde, carboxylic acids, carboxylic amide, amino acids, ketone, acetal, ketal, nitrile, ether, thioether, hydroxyl, thiol, nitro, fluoride, chloride, bromide, iodide, azide, triflate, boronic acid, boronic acid ester, silane, silyl ether, siloxane, silanol, sulfonic acid, sulfoxides, sulfone, phosphonic acid.

In a particularly preferred embodiment, each R is a functional group selected independently from aldehyde, carboxylic acid, nitrile, ether, thioether, hydroxyl, thiol, nitro, chloride, bromide, iodide, azide, and triflate.

In the aldehyde according to Formula 1, L can be absent or a linking group.

In an embodiment, L can be absent. In case that L is absent, the functional group is directly bonded to the carbon atom of the aldehyde group. Aldehydes according to Formula 1, wherein L is absent, are for example ethanedial (also known as glyoxal or oxalaldehyde) and oxoethanoic acid (also known as 2-oxo-acetic acid or glyoxylic acid) as well as esters and amides of oxoethanoic acid.

In another embodiment, L is a linking group, preferably an organic residue, e.g. with 1 to 15 carbon atoms.

The term "organic residue" generally refers to a residue known in organic chemistry. Preferably, the skeleton of the organic residue contains predominately carbon atoms, nitrogen atoms and/or oxygen, more preferably just carbon atoms.

In a preferred embodiment of the invention L can be an aromatic residue or an aliphatic residue.

An aromatic residue includes at least one ring system predominately containing carbon, nitrogen, sulphur or oxygen atoms, wherein said ring system comprises, according to the Huckel-Rule, a number of 4n+2 (n=0,1,2,...) delocalized electrons in conjugated double bonds, free electron-pairs or unoccupied p-orbitals.

In a preferred embodiment an aromatic residue refers to a residue with an aromatic skeletal structure, wherein the ring atoms of the aromatic skeletal structure are carbon atoms. The aromatic residue can be bonded to one or more functional groups as described above.

Suitable functional groups bonded to the aromatic residue can preferably be selected independently from one or more of the following functional groups selected from aldehyde, carboxylic acid, nitrile, ether, thioether, hydroxyl, thiol, nitro, chloride, bromide, iodide, azide, and triflate, in particular carboxylic acid, hydroxy, nitro, chloride, bromide, and iodide.

An aliphatic residue is a non-aromatic hydrocarbon compound which comprises predominantly carbon and hydrogen atoms, wherein some of the carbon atoms may be substituted by for example also by oxygen, sulphur, and nitrogen atoms. The aliphatic residue can be bonded to one or more functional groups as described above.

Suitable functional groups bonded to the aliphatic residue can preferably be selected independently from one or more of the following functional groups selected from aldehyde, carboxylic acid, nitrile, hydroxy, nitro, chloride, bromide, iodide, azide, and triflate, in particular aldehyde, carboxylic acid, hydroxy, chloride, bromide, and iodide.

In a preferred embodiment of the invention, L is an aliphatic linking group with 1 to 6 carbon atoms or an aromatic linking group with 4 to 15 carbon atoms.

Examples for aliphatic linking groups with 1 to 6 carbon atoms are $-CH_2-$, -CH(CH3)-, $-C(CH_3)_2-$, $CH(CH_2CH_5)-$, $-C(CH_3)(C_2H_5)-$, $-C(C_2H_5)_2-$, $-C(C_2H_5)(C_3H_7)-$, 1,1-cyclopropylene, 1,1-cyclobutylene and 1,1-cyclohexylene. Preferred is methylene.

Examples for aromatic linking groups with 4 to 15 carbon atoms are phenylene, 2-methyl phenylene, 4-methyl phenylene, 2-methoxy phenylene, 3-methoxy phenylene, 4-methoxy phenylene, 3,5 dimethoxy phenylene and naphthylene. Preferred are phenylene, 2-methyl phenylene, 4-methyl phenylene, 3-methoxy phenylene, 3,5-dimethoxy phenylene, more preferred phenylene, 3-methoxy phenylene, 3,5-dimethoxy phenylene, in particular phenylene.

In a preferred embodiment of the invention the aldehyde according to Formula 1 is selected from the group consisting of 2-hydroxyacetaldehyde, 2-chloroacetaldehyde, 2-bromoacetaldehyde, 2-iodoacetaldehyde, 2-hydroxyacetaldehyde, ethanedial (also known as glyoxal or oxalaldehyde), oxoethanoic acid (also known as 2-oxo-acetic acid or glyoxylic acid), 2,2,2-trichloroacetaldehyde, 4-hydroxy-3,4-dimethoxybenzaldehyde (syringaldehyde), 4-hydoxy-3-methoxybenzaldehyde (vanillin), 2-hydroxybenzaldehyde (salicylaldehyde), 2-chlorobenzaldehyde, 2-bromobenzaldehyde, 2-iodobenzaldehyde, 3-hydroxybenzaldehyde, 3-chlorobenzaldehyde, 3-bromobenzaldehyde, 3-iodobenzaldehyde, 4-hydroxybenzaldehyde, 4-chlorobenzaldehyde, 4-bromobenzaldehyde, 4-iodobenzaldehyde, 2,4-dichlorobenzaldehyde, 2,4-dibromobenzaldehyde, 2,4-diiodobenzaldehyde, 2-nitrobenzaldehyde, 4-nitrobenzaldehyde, 2,4-dinitrobenzaldehyde, 2,4,6-trinitrobenzaldehyde, 2-formylbenzoic acid, 4-formylbenzoic acid, and terephthalaldehyde.

In a preferred embodiment of the invention the lignocellulose-containing composition and the aldehyde according to Formula 1 are present in a weight ratio of 25:1 to 1:1, preferably 20:1 to 1.25:1, more preferably 15:1 to 1.5:1, in particular 10:1 to 2:1, wherein the weight of the aldehyde according to Formula 1 is based on the weight of formaldehyde.

With "based on the weight of formaldehyde" the following is meant. The molecular weight of formaldehyde is 30 g/mol. An aldehyde different from formaldehyde has the molecular weight of x g/mol. For example, the molecular weight of oxoethanoic acid (also known as 2-oxo-acetic acid or glyoxylic acid) is 74 g/mol. Thus, to contain the same amount of reactive aldehyde groups, the aldehyde according to Formula 1 different from formaldehyde has to be present in a weight which is x/30-fold the one of formaldehyde.

For example, the lignocellulose-containing composition and formaldehyde are present in a weight

ratio of 25:1, if 25 g lignocellulose-containing composition and 1 g of formaldehyde are provided.

In case that the aldehyde is oxoethanoic acid, the lignocellulose-containing composition and oxoethanoic acid having a molecular weight of 74 g/mol are present in a weight ratio of 25:1, if 25 g lignocellulose-containing composition and 2.47 g of oxoethanoic acid are provided. 2.47 corresponds to the ratio of the molecular weight of acetaldehyde to the molecular weight of formaldehyde.

Thus, in case the lignocellulose-containing composition and acetaldehyde are present in a weight ratio of 12.5:1 (corresponding to 25:2), 25 g of lignocellulose-containing composition and 4.94 g of oxoethanoic acid are provided.

In an alternatively preferred embodiment 1 to 100 mmol, preferably 3 to 70 mmol, more preferably 5 to 50 mmol, in particular 10 to 20 mmol of the aldehyde per gram of the lignocellulosic-containing composition can be used.

By applying step b), the bindings in the lignocellulose-containing composition between the lignin fraction and the cellulose or hemicellulose fractions are cleaved. Further, bindings within the lignin are also cleaved such that "fragments of lignin" are obtained which alternatively can be considered as so-called "oligomers of lignin".

In a preferred embodiment in step b) the lignocellulose-containing composition and aldehyde according to Formula 1 are reacted to form an acetal according to the formula R-L-CH($OR^2$)($OR^3$), wherein R is defined as described above and $R^2$ and $R^3$ are continuing sections of the lignin polymer contained in the lignocellulose-containing composition. Such continuing sections of a lignin polymer are known to the skilled person. In a preferred embodiment $R^2$ and $R^3$ are different continuing sections of the lignin polymer. Alternatively preferred, $R^2$ and $R^3$ can be identical sections of the lignin polymer.

In a preferred embodiment in step b) the lignocellulose-containing composition and aldehyde according to Formula 1 are reacted to preferably from an acetal according to one or more of Formulae 2 to 4

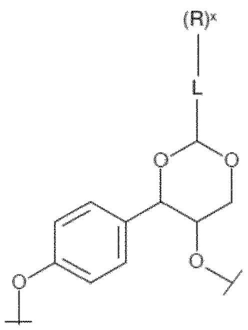

Formula 2,

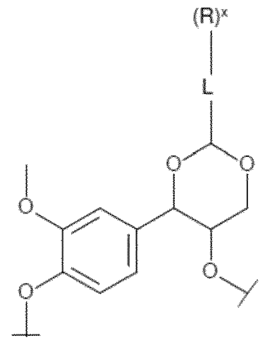

Formula 3, and/or

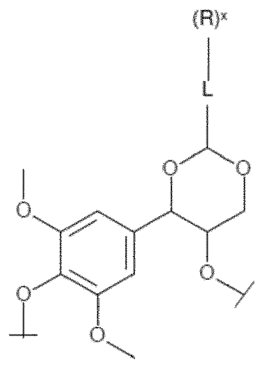

Formula 4.

In step c) of the method according to the present invention, the obtained fragments of lignin having one or more functional group(s) are separated from the residual mixture of step b).

Step c) can preferably comprise the following sub-steps:

c1) partitioning the fragments of lignin-containing phase and the residue,
c2) removing the solvent from the fragments of lignin-containing phase,
c3) treating the product of step c2) with a solvent, and
c4) separating the fragments of lignin having one or more functional group(s).

Step c1) can preferably comprise cooling the reaction mixture from step b). Cooling the composition from step b) is regarded as reducing the temperature from the starting temperature to a lower end temperature. In a preferred embodiment of the invention the reaction mixture from step b) is cooled to a temperature between 0 and 35°C, preferably between 10 and 30°C, in particular to about 23°C.

Step c1) can preferably comprise filtering the mixture. The mixture can be preferably filtered by applying a vacuum at the side of the filtrate. Further, the filter cake can preferably be washed. A suitable washing liquid can for example be tetrahydrofuran, ethyl acetate, or dioxane, preferably dioxane. Generally, the filter cake can contain cellulose or hemicellulose as well as insoluble substance contained in the lignocellulose-containing composition. The filtrate can be regarded as fragments of the lignin-containing phase.

Alternatively, step c1) can preferably comprise centrifuging the mixture of step b) and decant the fragments of lignin-containing phase from the residue.

Step c2) can preferably comprise neutralizing the fragments of lignin-containing phase (filtrate) from step c1) by the addition of an alkaline compound, preferably an alkaline inorganic compound. Alkaline, inorganic compounds can for example be hydroxides, carbonates, hydrogen carbonates, phosphates, hydrogen phosphates and sulfates of alkali and earth alkali metals. In a preferred embodiment calcium hydroxide and/or calcium carbonate are used as alkaline inorganic compounds. More preferred are carbonates of alkali metals, such as sodium carbonate or potassium carbonate, in particular sodium carbonate. After neutralization the solvent can be removed from the obtained fragments of lignin-containing phase.

Alternatively, the solvent can be removed from the fragments of lignin-containing phase from step c1) without neutralization.

In line with step c2) of the present application removing the solvent can be considered as removing the major portion of the solvent, i.e. even after removing the solvent the obtained product may still contain residual solvent of up to 15 wt.%.

In a preferred embodiment removing the solvent can be carried out at an elevated temperature, preferably between 35° and 60°C, in particular at about 45°C, and/or under reduced pressure, such as 1 to 100 mbar, preferably at about 50 mbar.

In step c3) the product from step c2) can be treated with a solvent, whereas the solvent can be dependent on the one or more functional group(s) R. Examples of suitable solvents include water, methanol, tetrahydrofuran, and ethyl acetate. Treating the product from step c2) with a solvent can preferably be carried out under mechanical movement, such as stirring. Further, the treatment with a solvent can preferably be carried out at a temperature of 20°C to 25°C.

In one embodiment, the treatment of the product from step c2) with a solvent can lead to the formation of a precipitate. The treatment of the product from step c2) with a solvent can preferably be carried out under stirring.

In one embodiment, when treating the product from step c2) with a solvent, the product from step c2) can be dissolved, preferably completely dissolved, in said solvent. In the case the product from step c2) can be dissolved in the solvent, the corresponding solution can preferably be added to a second solvent such that a precipitate is formed. Adding the solution to the second solvent can preferably be carried out under stirring. Examples of suitable second solvents are diethyl ether, dibutyl ether, tert-butyl methyl ether, cyclopentane, hexane, heptane, benzene, and toluene or mixtures thereof.

Step c4) can preferably comprise filtering the mixture of c3), i.e. filtering the precipitate from the supernatant solution. The mixture can preferably be filtered by applying a vacuum at the side of the filtrate to obtain the fragments of lignin having one or more functional group(s). The product can preferably be dried at an elevated temperature, preferably at between 40° and 60°C, and/or under reduced pressure, such as 0.01 to 50 mbar, preferably at about 0.05 mbar. The filtrate can contain several by-products and may be discarded.

Alternatively, step c4) can preferably comprise centrifuging the mixture of step c3) and decant the supernatant solution from the fragments of lignin having one or more functional group(s). The product can preferably be dried at an elevated temperature, preferably between 40° and 60°C, and/or under reduced pressure, such as 0.01 to 50 mbar, preferably at about 0.05 mbar.

In a preferred embodiment the method can comprises bleaching (step c5)) of the product obtained from step c). A bleach step can be applied in case that the product of step c4) exhibits an undesirable color. The bleaching step preferably comprises to bring the product obtained from step c) in contact with a mixture of an oxidizing agent and an alkaline compound, preferably an inorganic alkaline compound, in a solvent preferably for 10 to 180 minutes at preferably 40 to 80°C. Oxidizing agents are known in the art, preferred is hydrogen peroxide. As far as the alkaline compound, preferably the inorganic alkaline compound is concerned, the same as described above applies. Preferred is sodium hydroxide. Suitable solvents are for example water, benzene, toluene and ethyl acetate, in particular ethyl acetate. Further, said step can contain washing the organic phase with water or saline, drying the organic phase, separating the drying agents from the organic phase and removing the solvent to obtain a less colored, preferably off-white product.

In a further embodiment the method of the present invention comprises step d) of optionally further reacting one or more functional group(s) of the product of step c) to give the fragments of lignin having one or more functional group(s) R'.

In a preferred embodiment R' is a functional group selected from alkene, alkyne, aldehyde, anhydride, carboxylic acid, carboxylic ester, acyl chloride, acyl bromide, acyl iodide, acyl fluoride, sulfonyl chloride, sulfonyl iodide, sulfonyl bromide, sulfonyl fluoride, ketene, hydroxy, ketone, acetal, ketal, hemi-acetal, hemi-ketal, ether, carboxylic amide, diazoketone, imine, oxime, amine, fulminate, cyanate, azide, nitro, nitrile, isocyanate, amino acid, boronic acid, boronic acid ester, borate, borate salt, borane, organosilane, silyl ether, siloxane, silanol, isothiocyanate, thiol, sulfonamide, sulfonate, sulfonic acid, sulfate, sulfone, persulfate, peroxide, sulfoxides, thioether, dithiane, phosphate, phosphate ester, phosphonate, phosphonic acid, phosphonate ester, phosphonium salt, phosphine, phosphite,

phosphite ester, phosphite salt , fluoride, chloride, bromide, iodide, triflate, organomagnesium (Grignards), organolithium, dialkyllithium cuprate, organozinc, and acetylide.

or

a heterocycle selected from aziridine, 2*H*-azirine, oxirane, thiirane, azetidine, 2,3-dihydroazete, azete, 1,3-diazetidine, oxetane, 2 *H*-oxete, thietane, 2*H*-thiete, azetidin-2-one, pyrrolidine,3-pyrroline, 2-pyrroline, 2*H*-pyrrole, 1*H*-pyrrole, pyrazolidine, imidazolidine, 2-pyrazoline, 2-imidazoline, pyrazole, imidazole, 1,2,4-triazole, 1,2,3-triazole, tetrazole, tetrahydrofuran, furan, 1,3-diozolane, tetrahydrothiophene, thiophene, oxazole, isoxazole, isothiazole, thiazole, 1,2-oxathiolane, 1,3-oxathiolane, 1,2,5-oxadiazole, 1,2,3-oxadiazole, 1,3,4-thiadiazole, 1,2,5-thiadiazole, sulfolane, 2,4-thiazolidinedione, succinimide, 2-oxazolidone, hydantoin, piperidine, pyridine, piperazine, pyridazine, pyrimidine, pyrazine, 1,2,4-triazine, 1,3,5-triazine, tetrahydropyran, 2*H*-pyran, 4*H*-pyran, pyrylium, 1,4-dioxane, 1,4-dioxine, thiane, 2*H*-thiopyran, 4*H*-thiopyran, 1,3-dithiane, 1,4-dithiane, 1,3,5-trithiane, morpholine, 2*H*-1,2-oxazine, 4*H*-1,2-oxazine, 6*H*-1,2-oxazine, 2*H*-1,3-oxazine, 4*H*-1,3-oxazine, 6*H*-1,3-oxazine, 4*H*-1,4-oxazine, 2*H*-1,4-oxazine, thiomorpholine, 4*H*-1,4-thiazine, 2*H*-1,2-thiazine, 6*H*-1,2-thiazine, 2*H*-1,4-thiazine, cytosine, thymine, uracil, thiomorpholine dioxide, hexahydro-1*H*-pyrrolizine, 1,4,5,6-tetrahydrocyclopental[b]pyrrole, 1,3a,4,6a-tetrahydropyrrolo-[3,2-b]pyrrole, 1,4-dihydropyrrolo[3,2-b]pyrrole, 1,6-dihydropyrrolo[2,3-b]pyrrole, 6*H*-furo[2,3-b]pyrrole, 4*H*-furo[3,2-b]pyrrole, 4*H*-thieno[3,2-b]pyrrole, 6*H*-thieno[2,3-b]pyrrole, 2,3-dihydro-1*H*-indene, indene, indoline, 3*H*-indole, 1*H*-indole, 2*H*-isoindole, indolizine, 1*H*-indazole, benzimidazole, 4-azaindole, 5-azaindole, 6-azaindole, 7-azaindole, 7-azaindazole, pyrazolo[1,5-a] pyrimidine, purine, benzofuran, isobenzofuran, benzo[c] thiophene, benzo[b]thiophene, 1,2-benzisoxazole, 2,1-benzisoxazole, 1,2-benzisothiazole, 2,1-benzisothiazole, benzoxazole, benzthiazole, benzo[c][1,2,5]thiadiazole, 1,2-benzisothiazole-3(2*H*)-one, adenine, guanine, decahydroisoquinoline, decahydroquinoline, tetrahydroquinoline, 1,2-hydroquinoline, 1,2-dihydroisoquinoline, quinoline, isoquinoline, 4*H*-quinolizine, quinoxaline, phthalazine, quinazoline, cinnoline, 1,8-naphthyridine, pyrido[3,2-*d*]pyrimidine, pyrido[4,3-*d*]pyrimidine pyrido[3,4-d]pyrazine, pyrido-[2,3-b]pyrazine, pteridine, 2*H*-chromene, 1*H*-isochromene, 3*H*-isochromene, 2*H*-chromen-2-one, 2*H*-benzo[*e*][1,2]oxazine, 2H-benzo[e] [1,3]oxazine, 2*H*-benzo[b][1,4]oxazine, quinoline-2(1*H*)-one, isoquinolin-1(2*H*)-one, isoquinolin-1(2*H*)-one, fluorene, carbazole, dibenzofuran, acridine, phenazine, phenoxazine, phenothiazine, phenoxathiine, quinuclidine, 1-azaadamantane, 2-azaadamantane, 2,3-dihydroazepine, 2,5-dihydroazepine, 4,5-dihydroazepine, azepine, 2*H*-azepine, 3*H*-azepine, 4*H*-azepine, 1,2-diazepine, 1,3-diazepine, 1,4-diazepine, oxepane, thiepine, 1,4-thiazepine, azocane, azocine, thiocane, azonane or azecine.

In a more preferred embodiment R' is a functional group selected from alkene, alkyne, aldehyde, anhydride, carboxylic acid, carboxylic ester, acyl chloride, sulfonyl chloride, hydroxy, ketone, acetal, ketal, ether, carboxylic amide, diazoketone, imine, oxime, amine, azide, nitro, nitrile, isocyanate, boronic acid, boronic acid ester, borate, borate salt, borane, organosilane, silyl ether, siloxane, silanol, thiol, sulfonamide, sulfonate, sulfonic acid, thioether, phosphate ester, phosphonate, phosphonate ester, phosphonium salt, fluoride, chloride, bromide, iodide, triflate, organomagnesium (Grignards), organolithium, dialkyllithium cuprate, organozinc, and acetylide even more preferably R' is a functional group selected from alkene, alkyne, aldehyde, anhydride, carboxylic acid, carboxylic ester, acyl chloride, sulfonyl chloride, hydroxy, ketone, ether, carboxylic amide, diazoketone, amine, azide, nitro, nitrile, isocyanate, boronic acid, boronic acid ester, borate, borate salt, organosilane, thiol, sulfonamide, sulfonate, sulfonic acid, phosphonium salt, fluoride, chloride, bromide, iodide, triflate, organomagnesium (Grignards), organolithium, organozinc, and acetylides.

In a particularly preferred embodiment R' is a functional group selected from carboxylic acid, anhydride, acyl chloride, carboxylic ester, carboxylic amide, isocyanate, ether, alkyne, alkene, aldehyde, chloride, bromide, iodide, triflate, hydroxy, thiol, amine, and azide.

Reacting one or more functional group(s) of the product of step c) to give the fragments of lignin having one or more functional group(s) R' can be carried out by reactions as known in the art, such as nucleophilic substitution, oxidation and Grignard reaction.

A further subject of the present invention is the fragments of lignin having one or more functional groups R and/or R' obtainable by the method according to the present invention. These fragments of lignin can be regarded as compounds provided with a functional group which are tailor made for the corresponding application or use.

Another subject of the present invention is a composition comprising fragments of lignin according to the present invention. In a preferred embodiment the fragments are represented by one or more of Formulae 2 to 4

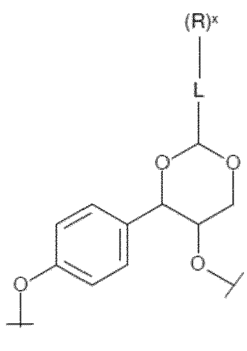

Formula 2,

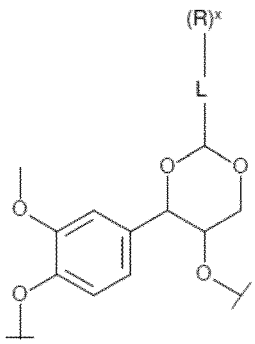

Formula 3, and/or

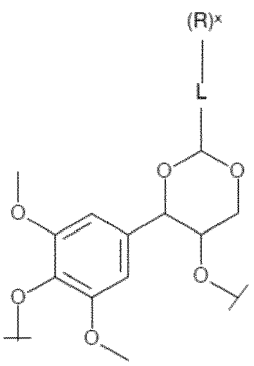

Formula 4.

In a preferred embodiment the composition can further comprise one or more of the additives selected from pharmaceutical excipients, solvents, dyes, colouring agents, reinforcing agents, surfactants, dispersants, acids, bases, pesticides, polymers, resins, conductive metals, catalytic metals, reactive metals, catalysts, cellulose fibres, glass fibres, sugars, humins, bitumen, concrete, super-adsorbed polymers, formaldehyde, glyoxylic acid, activated carbon, proteins, amino acids, cosmetic additives, vitamins, antioxidants, vitamins, resins, silicones, driers, antifungals, antibacterials, exfoliants, caffeine, clays, essential oils, fatty acids, mineral oils, metal oxides, detergents, driers, and cross-linking agents.

A further subject of the invention is the use of fragments of lignin according to the invention or the composition according to the invention for the production of resins, adhesives, polymers, carbon fibres, concrete additives, thermal insulation, electrical insulation, paints, surfactants, photoresist, photographic film, antimicrobial films, anti-fungal films, anti-corrosion coatings, waterproofing materials, lubricants, UV-absorbing additive for polymers, activated carbons, pigments, dyes, anti-corrosion additives, fire-retardants, catalysts, battery anodes, battery cathodes, ionomers, ion-exchange resins, ion-exchange membranes, super-absorbent polymers, gas permeable membranes, UV-absorbing creams (sunblock or sunscreen), drug delivery substrates, fragrance delivery substrates, flavour delivery substrates, food additives (antioxidant), food supplements (antioxidant), cosmetic additives, fuel for concrete kilns, fuel for electricity generation, fuel for steel mills, explosives, solid rocket fuel, gunpowder, smokeless powder, fireworks, ablative armour, reactive armour, pesticide, fungicide, antifungal, antiviral, tanning creams, and/or antibiotic.

The invention will now be illustrated with reference to the following examples.

## Experimental Section:

## I. Materials

### 1.1 Biological materials

The birch wood was procured from Dr. Michael Studer of Bern University of Applied Sciences. The birch tree (Betula pendula, ca. 40 years old) was harvested in May of 2018 in Solothurn, Switzerland. The tree was debarked and the stem (trunk) was converted into wood chips which were then air-dried at 40°C for 24 hours. These wood chips were then collected and transported to EPFL, where they were sieved and sorted to remove residual bark and leaves. The wood chips were then milled using a 6 mm screen and then machine sieved with a 0.45 mm mesh to remove fines.

### 1.2 Chemicals

All chemicals were commercially available and were used without further purification. 1,4-Dioxane (≥99.5% for synthesis), 2-hydroxybenzaldehyde (salicylaldehyde; ≥99% for synthesis), 3-hydroxybenzaldehyde (≥99% for synthesis), 4-hydroxybenzaldehyde (≥99% for synthesis), and vanillin (99% for biochemistry) were purchased from Carl Roth AG. Ethyl Acetate, hexane, methanol and toluene were purchased from Thommen-Furler AG. Chloroacetaldehyde (50 wt% in $H_2O$), glycoaldehyde dimer (mixture of stereoisomers), and 4-chlorobenzaldehyde were purchased from Sigma Aldrich. Hydrogen peroxide (30 wt/wt%) and sodium hydroxide (pastilles) were purchased from Reacto Lab SA. Diethyl ether (≥ 99.5%, stabilised with BHT) was purchased from Carlo Erba Reagents. Di-n-butyl ether (99%) was purchased from ABCR. Glyoxylic Acid Monohydrate (97%) was purchased from Fluorochem and hydrochloric acid (37 wt/wt% for analysis, fuming) was purchased from Merck.

## II. Examples

### II.1 Preparation of fragments of lignin having one or more functional group(s)

### General biomass extraction procedure

Biomass (5.0000 g) each was massed into a five tared, 29/32, 100 mL round-bottom flasks. To each flask was then added 1,4-dioxane (25 mL), the corresponding aldehyde (66 mmol, 6.6 equiv.), hydrochloric acid (37 wt/wt%, 0.83 mL, 10 mmol, 1.0 equiv.) and a PTFE-coated stir bar. Each flask was then fitted with a reflux condenser and an airlock which was composed of an oil bubbler containing silicone oil, a short piece of 6 mm tygon tubing and a 29/32, 90° bend tube adapter. The reaction was then heated with stirring to 85°C. After three hours (five hours in case of the aldehyde being chloroacetaldehyde), each reaction mixture was cooled to room temperature (~25°C) and filtered through a glass filter funnel (porosity grade 3) and washed with dioxane (25 mL) to remove the cellulose-rich solids. Each filtrate was then transferred to a 29/32, 250 mL round-bottom flask and concentrated on a rotavap with a bath temperature of 45°C and an ultimate pressure of 10 mbar. The lignin was then precipitated according to the corresponding aldehyde used in the reaction (see below).

**E.1 Chloroacetaldehyde as aldehyde**

The concentrated crude reaction mixture obtained from the above general biomass extraction procedure was diluted with ethyl acetate (50 mL) and added dropwise using a glass pipette to a 500 mL reagent bottle containing diethyl ether (250 mL) that was being stirred by a bar-type PTFE coated stir bar at 250 RPM. Filtration and drying afforded a purple powder (1.5833 g, 31.4 wt/wt%).

**E.2 Glyoxylic acid monohydrate as aldehyde**

Into the concentrated lignin solution obtained from the above general biomass extraction procedure was added de-ionized water (100 mL) followed by an oval-type PTFE coated stir bar. The mixture was stirred at 500 RPM for 30 minutes to break the large agglomerations. The stir bar was then removed. Filtration and drying afforded a beige powder (1.0731 g, 21.3 wt%).

**E.3 4-Hydroxybenzaldehyde as aldehyde**

The concentrated crude reaction mixture obtained from the above general biomass extraction procedure was diluted with THF (20 mL) and then added dropwise using a glass pipette to a 250 mL round-bottom flask containing di-n-butyl ether (100 mL) that was being stirred by an oval-type PTFE coated stir-bar at 500 RPM. The PTFE coated stir-bar was removed, and the solution was concentrated *in vacuo* at 100 mbar and 45 °C on a rotavap, evaporating the THF and causing the precipitation of more lignin. Filtration and drying afforded a purple powder (1.4561 g, 28.8 wt/wt%). The residual precipitated lignin was triturated by sonicating it with diethyl ether (50 mL) for 30 min at 30 °C. Filtration and drying afforded a purple powder (0.8628 g, 19.9 wt/wt%).

**E.4 3-Hydroxybenzaldehyde as aldehyde**

The concentrated crude reaction mixture obtained from the above general biomass extraction procedure was diluted with THF (20 mL) and then added dropwise using a glass pipette to a 250 mL round-bottom flask containing di-n-butyl ether (100 mL) that was being stirred by an oval-type PTFE coated stir-bar at 500 RPM. The PTFE coated stir-bar was removed, and the solution was concentrated *in vacuo* at 100 mbar and 45 °C on a rotavap, evaporating the THF and causing the precipitation of more lignin. Filtration and drying afforded a brown powder (1.6573 g, 32.8 wt/wt%). The residual precipitated lignin was triturated by sonicating it with diethyl ether (50 mL) for 30 min at 30 °C. Filtration and drying afforded a brown powder (0.9237 g, 21.1 wt/wt%).

**E.5 2-Hydroxybenzaldehyde (salicylaldehyde) as aldehyde**

The concentrated crude reaction mixture obtained from the above general biomass extraction procedure diluted with THF (20 mL) and then added dropwise using a glass pipette to a 250 mL round-bottom flask containing di-n-butyl ether (100 mL) that was being stirred by an oval-type PTFE coated stir-bar at 500 RPM. The PTFE coated stir-bar was removed, and the solution was concentrated *in vacuo* at 100 mbar and 45 °C on a rotavap, evaporating the THF and causing the precipitation of more lignin. Filtration and drying afforded a purple powder (1.2628 g, 25.2 wt/wt%). The residual precipitated lignin was diluted with THF (15 mL) and then added dropwise using a glass pipette to a 29/32, 250 mL round bottom flask containing diethyl ether (150 mL) that was being stirred by an oval-type PTFE coated stir-bar at 500 RPM. The PTFE coated stir-bar was removed. Filtration and drying afforded a purple powder (0.6948 g, 16.7 wt/wt%).

**E.6 p-Chlorobenzaldehyde as aldehyde**

The concentrated crude reaction mixture obtained from the above general biomass extraction procedure was diluted with THF (20 mL) and then added dropwise using a glass pipette to a reagent bottle containing hexanes (250 mL) that was being stirred by a bar-type PTFE coated stir-bar at 250 RPM. Filtration and drying afforded a pink powder (1.7634 g, 35.2 wt/wt%). The residual precipitated lignin was diluted with THF (20 mL) and then added dropwise using a glass pipette to a 29/32, 250 mL round bottom flask containing di-n-butyl ether (100 mL) that was being stirred by an oval-type PTFE coated stir-bar at 500 RPM. The PTFE coated stir-bar was removed and the THF was removed on the rotavap (45 °C bath temperature, 50 mbar final pressure). Filtration and drying afforded a pink powder (0.9402 g, 21.7 wt/wt%). Due to the presence of residual *p*-chlorobenzaldehyde, the lignin was precipitated for a third time by

diluting it with THF (15 mL) and adding it dropwise using a glass pipette to a 29/32, 250 mL round bottom flask containing diethyl ether (150 mL) that was being stirred by an oval-type PTFE coated stir-bar at 500 RPM. The PTFE coated stir-bar was removed. Filtration and drying afforded a pink powder (0.8335 g, 17.0 wt/wt% after correcting for the hydrogenolysis sample).

**E.7 4-hydroxy-3-methoxybenzaldehyde (vanillin) as aldehyde**

The concentrated crude reaction mixture obtained from the above general biomass extraction procedure was diluted with THF (20 mL) and then added dropwise using a glass pipette to a 250 mL round-bottom flask containing di-n-butyl ether (100 mL) that was being stirred by an oval-type PTFE coated stir-bar at 500 RPM. The PTFE coated stir-bar was removed, and the solution was concentrated *in vacuo* at 100 mbar and 45 °C on a rotavap, evaporating the THF and causing the precipitation of more lignin. Filtration and drying afforded a brown powder (1.6455 g, 32.7 wt/wt%). The residual precipitated lignin was diluted with THF (15 mL) and then added dropwise using a glass pipette to a 29/32, 250 mL round bottom flask containing diethyl ether (150 mL) that was being stirred by an oval-type PTFE coated stir-bar at 500 RPM. The PTFE coated stir-bar was removed. Filtration and drying afforded a brown powder (0.7651 g, 17.3 wt/wt%).

**E.8 2-hydroxyaetaldehyde (glycoaldehyde) as aldehyde**

The concentrated crude reaction mixture obtained from the above general biomass extraction procedure was diluted with THF (20 mL) and then added dropwise using a glass pipette to a 500 mL round-bottom flask containing diethyl ether (200 mL) that was being stirred by an oval-type PTFE coated stir-bar at 250 RPM. The PTFE coated stir-bar was removed. Filtration and drying afforded a brown powder (2.9121 g, 57.9 wt/wt. The residual precipitated lignin was diluted with THF (15 mL) and then added dropwise using a glass pipette to a 250 mL round-bottom flask containing ethyl acetate (150 mL) that was being stirred by an oval-type PTFE coated stir-bar at 500 RPM. The PTFE coated stir-bar was removed, and the solution was concentrated *in vacuo* at 200 mbar and 45 °C on a rotavap, evaporating the THF and causing the precipitation of more lignin. Filtration and drying afforded a brown powder (1.3455 g, 28.8 wt/wt%).

The products obtained from E.1 to E8 can be regarded as fragments of lignin having one or more functional group(s).

**II.2 Bleaching of fragments of lignin having one or more functional groups**

**General bleaching procedure:**

Fragments of lignin having one or more functional group(s) (1 g) was massed into a 29/32, 50 mL round-bottom flask. To the flask was added a PTFE-coated stir bar, ethyl acetate (10 mL), 2 M sodium hydroxide (5 mL, 10 mmol, 1.0 equiv.) and hydrogen peroxide (30 wt%, 1.4 mL, 13.7 mmol, 13.7 equiv.). The flask was then heated to 60°C uncapped with stirring for 30 min or until all bubbling ceased. The reaction was then cooled to room temperature (~23-30°C) and transferred quantitatively with ethyl acetate to a 100 mL separatory funnel. Saturated sodium chloride solution (15 mL) and ethyl acetate (10 mL) were added. The separatory funnel was swirled, but not shaken (to prevent the formation of an emulsion) and the layers were separated. The organic layer was returned to the separatory funnel using ethyl acetate to affect a quantitative transfer followed by more saturated sodium chloride solution (15 mL). Once again, the separatory funnel was swirled, and the layers were separated. This wash cycle was repeated once more. Anhydrous magnesium sulphate (~1-2 g) and a PTFE-coated stir bar were then added to the organic layer. The solution was stirred for 30 min then filtered through a glass filter funnel (porosity grade 3) with a quantitative transfer being provided by ethyl acetate. The filtrate was then transferred into a 250 mL round-bottom flask and concentrated *in vacuo* on a rotavap. The resulting oily solid was transferred into a tared 100 mL round-bottom flask, concentrated again, diluted with hexanes (20 mL) and concentrated one last time to afford the oxidized fragments of lignin having one or more functional group(s) as an off-white powder.

**E.9 Bleaching of the product of E.2**

The above general bleaching procedure was applied, but more sodium hydroxide was used (6 mL, 12 mmol, 1.0 equiv.) and no ethyl acetate was used. To workup the reaction, it was first cooled to room temperature (~23-30°C) then acidified with hydrochloric acid (37 wt%, 1.1 mL, 13.2 mmol, 1.1 equiv.). The resulting off-white precipitate was collected by filtration and dried to afford the bleached glyoxylic acid stabilized lignin as an off-white powder (0.7216 g, 70%).

**Claims**

**1.** Method for producing fragments of lignin having one or more functional group(s), wherein the method comprises the steps of

a) providing a lignocellulose-containing composition;

b) heating the composition of step a) under acidic conditions together with an aldehyde according to Formula 1,

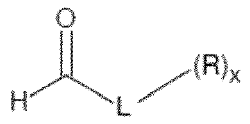

Formula 1

wherein L is absent or a linking group, and wherein R is a functional group, x is an integer from 1 to 5;

c) separating fragments of lignin having one or more functional group(s) from the mixture of step b; and
d) optionally further reacting one or more functional group(s) of the product of step c) to give the fragments of lignin having one or more functional group(s) R'.

**2.** Method according to claim 1, wherein the lignocellulose-containing composition has a lignin content of 1-50 wt.%.

**3.** Method according to claim 1 or 2, wherein step a) involves suspending the lignocellulose-containing composition in an organic solvent, wherein preferably the organic solvent is a polar aprotic solvent that contains less than 50 % v/v of water.

**4.** Method according to any one of claims 1 to 3, wherein in step b) a temperature of 50 to 120 °C is applied for 0.1 to 72 hours.

**5.** Method according to any one of claims 1 to 4, wherein the acidic additions are achieved by addition of 0.5 to 20 mmol acidic compound per gram of the lignocellulose-containing composition.

**6.** Method according to any one of claims 1 to 5, wherein each R is a functional group independently selected from aldehyde, carboxylic acid, nitrile, ether, thioether, hydroxyl, thiol, nitro, chloride, bromide, iodide, azide, and triflate.

**7.** Method according to any one of claims 1 to 6, wherein L is an aliphatic linking group with 1 to 6 carbon atoms or an aromatic linking group with 4 to 15 carbon atoms.

**8.** Method according to any one of claims 1 to 7, wherein the aldehyde according to Formula (1) is selected from the group consisting of 2-hydroxyacetaldehyde, 2-chloroacetaldehyde, 2-bromoacetaldehyde, 2-iodoacetaldehyde, 2-hydroxyacetaldehyde, ethanedial (also known as glyoxal or oxalaldehyde), oxoethanoic acid (also known as 2-oxo-acetic acid or glyoxylic acid), 2,2,2-trichloroacetaldehyde, 4-hydroxy-3,4-dimethoxybenzaldehyde (syringaldehyde), 4-hydoxy-3-methoxybenzaldehyde (vanillin), 2-hydroxybenzaldehyde (salicylaldehyde), 2-chlorobenzaldehyde, 2-bromobenzaldehyde, 2-iodobenzaldehyde, 3-hydroxybenzaldehyde, 3-chlorobenzaldehyde, 3-bromobenzaldehyde, 3-iodobenzaldehyde, 4-hydroxybenzaldehyde, 4-chlorobenzaldehyde, 4-bromobenzaldehyde, 4-iodobenzaldehyde, 2,4-dichlorobenzaldehyde, 2,4-dibromobenzaldehyde, 2,4-diiodobenzaldehyde, 2-nitrobenzaldehyde, 4-nitrobenzaldehyde, 2,4-dinitrobenzaldehyde, 2,4,6-trinitrobenzaldehyde, 2-formylbenzoic acid, 4-formylbenzoic acid, and terephthalaldehyde.

**9.** Method according to any one of claims 1 to 8, wherein the lignocellulose-containing composition and aldehyde according to Formula 1 are present in a weight ratio of 25:1 to 1:1, wherein the aldehyde is based on the weight of formaldehyde.

**10.** Method according to any one of claims 1 to 9, wherein in step b) the lignocellulose-containing composition and aldehyde according to Formula 1 are reacted to form an acetal according to the formula R-L-CH($OR^2$)($OR^3$), wherein $R^2$ and $R^3$ are continuing sections of the lignin polymer contained in the lignocellulose-containing composition, wherein the lignocellulose-containing composition and aldehyde according to Formula 1 are reacted to preferably form an acetal according to one or more of Formulae 2 to 4

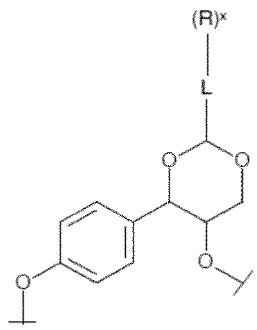

Formula 2,

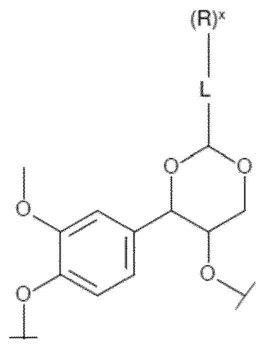

Formula 3, and/or

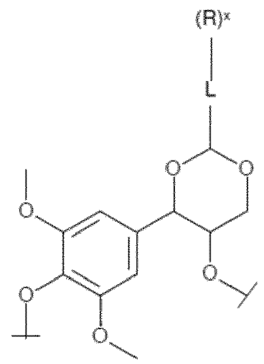

Formula 4.

**11.** Method according to any one of claims 1 to 10, wherein step c) comprises the sub-steps:

c1) partitioning the fragments of lignin-containing phase and the residue
c2) removing the solvent from the fragments of lignin-containing phase
c3) treating the residue of step c2) with a solvent
c4) separating fragments of lignin.

**12.** Method according to any one of claims 1 to 11, wherein R' is a functional group selected from alkene, alkyne, aldehyde, anhydride, carboxylic acid, carboxylic ester, acyl chloride, sulfonyl chloride, hydroxy, ketone, ether, carboxylic amide, diazoketone, amine, azide, nitro, nitrile, isocyanate, boronic acid, boronic acid ester, borate, borate salt, organosilane, thiol, sulfonamide, sulfonate, sulfonic acid, phosphonium salt, fluoride, chloride, bromide, iodide, triflate, organomagnesium (Grignards), organolithium, organozinc, and acetylides.

**13.** Fragments of lignin having one or more functional groups R and/or R' obtainable by the method according to any one of claims 1 to 12.

**14.** Composition containing fragments of lignin according to claim 13, wherein these fragments are preferably represented by one or more of Formulae 2 to 4

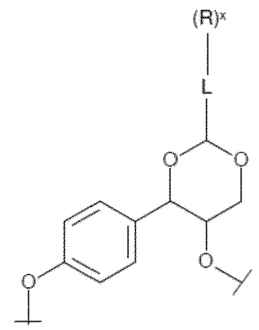

Formula 2,

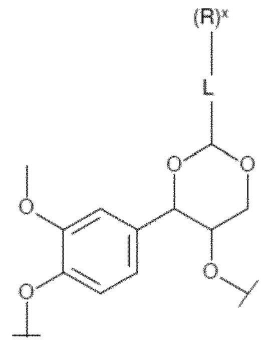

Formula 3, and/or

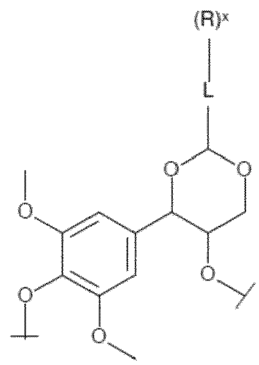

Formula 4.

**15.** Use of fragments of lignin according to claim 13 or the composition of claim 14 for the production of resins, adhesives, polymers, carbon fibres, concrete additives, thermal insulation, electrical insulation, paints, surfactants, photoresist, photographic film, antimicrobial films, anti-fungal films, anti-corrosion coatings, waterproofing materials, lubricants, UV-absorbing additive for polymers, activated carbons, pigments, dyes, anti-corrosion additives, fire-retardants, catalysts, battery anodes, battery cathodes, ionomers, ion-exchange resins, ion-exchange membranes, super-absorbent polymers, gas permeable membranes, UV-absorbing creams (sunblock or sunscreen), drug delivery substrates, fragrance delivery substrates, flavour delivery substrates, food additives (antioxidant), food supplements (antioxidant), cosmetic additives, fuel for concrete kilns, fuel for electricity generation, fuel for steel mills, explosives, solid rocket fuel, gunpowder, smokeless powder, fireworks, ablative armour, reactive armour, pesticide, fungicide, antifungal, antiviral, tanning creams, and/or antibiotic.

Europäisches Patentamt
European Patent Office
Office européen des brevets

# EUROPEAN SEARCH REPORT

Application Number
EP 19 20 2957

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2 760 861 A (FURMAN KENNETH E ET AL) 28 August 1956 (1956-08-28) * the whole document * ----- | 1-15 | INV. C07G1/00 C08H7/00 |
| Y,D | WO 2017/178513 A1 (ECOLE POLYTECHNIQUE FED DE LAUSANNE [CH]) 19 October 2017 (2017-10-19) * the whole document * ----- | 1-15 | |
| A | CN 109 706 769 A (UNIV QILU TECHNOLOGY) 3 May 2019 (2019-05-03) * the whole document * ----- | 1-15 | |

TECHNICAL FIELDS SEARCHED (IPC)
C07G
C09J
C08H

The present search report has been drawn up for all claims

1

| Place of search | Date of completion of the search | Examiner |
|---|---|---|
| The Hague | 28 April 2020 | de Nooy, Arjan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 20 2957

This annex lists the patent family members relating to the patent documents cited in the above-mentioned European search report. The members are as contained in the European Patent Office EDP file on
The European Patent Office is in no way liable for these particulars which are merely given for the purpose of information.

28-04-2020

| Patent document cited in search report | Publication date | Patent family member(s) | Publication date |
|---|---|---|---|
| US 2760861 A | 28-08-1956 | NONE | |
| WO 2017178513 A1 | 19-10-2017 | BR 112018071060 A2 | 07-05-2019 |
| | | CA 3029301 A1 | 19-10-2017 |
| | | CN 109328185 A | 12-02-2019 |
| | | EP 3442938 A1 | 20-02-2019 |
| | | US 2019127304 A1 | 02-05-2019 |
| | | WO 2017178513 A1 | 19-10-2017 |
| CN 109706769 A | 03-05-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017178513 A


### Non-patent literature cited in the description


- **LUTERBACHER et al.** Formaldehyde Stabilization Facilitates Lignin Monomer Production during Biomass Depolymerisation. *Science 80,* 2016, vol. 354 (6310), 329-333